Europäisches Patentamt

(19) European Patent Office   (11) Publication number: **0 066 206**

Office européen des brevets   **B1**

(12) **EUROPEAN PATENT SPECIFICATION**

(45) Date of publication of patent specification: **11.12.85**   (51) Int. Cl.⁴: **H 05 H 1/12, G 21 B 1/00**

(21) Application number: **82104431.0**

(22) Date of filing: **19.05.82**

(54) **Torus type nuclear fusion apparatus.**

(30) Priority: **21.05.81 JP 75786/81**

(43) Date of publication of application:
**08.12.82 Bulletin 82/49**

(45) Publication of the grant of the patent:
**11.12.85 Bulletin 85/50**

(84) Designated Contracting States:
**DE FR GB**

(56) References cited:
**DE-A-2 854 576**
**US-A-4 073 680**
**US-A-4 145 250**

**JOURNAL OF NUCLEAR MATERIALS, vol.85 &
86, Part A., December 1979, Amsterdam (NL)
R.A.LANGLEY et al.: "The ISX-A graphite
limiter experiment", pages 215-219.
KERNTECHNIK, vol.19, no.6, June 1977,
München (DE)H.VERNICKEL: " Impurities in
fusion reactor plasmas" pages 279-284.
NUCLEAR FUSION, vol.15, no.4, August 1975,
Vienna (AT) K.TOI etal.: " Behaviour of tokamat
plasma in the dynamic limiter experiment",
pages 637-642.**

(73) Proprietor: **Kabushiki Kaisha Toshiba
72, Horikawa-cho Saiwai-ku
Kawasaki-shi Kanagawa-ken 210 (JP)**

(72) Inventor: **Gomei, Yoshino
9-1109, 3-85-6, Mutsukawa
Minami-ku Yokohama-shi (JP)**

(74) Representative: **Klunker, Hans-Friedrich, Dr.
et al
Patentanwälte Klunker . Schmitt-Nilson . Hirsch
Winzererstrasse 106
D-8000 München 40 (DE)**

## Description

The present invention relates to a torus type nuclear fusion apparatus for generating torus type plasma in a space enclosed by a first wall of a blanket and including limiter means for neutralizing helium ions as well as maintaining torus type plasma stable, and evacuating means having an evacuating room communicated through a through-hole with the space enclosed by the first wall for evacuating helium gas through the neutralization of helium ion, a product of the fusion reaction, said limiter means comprising a first limiter arranged between said outer circumference of plasma and the first wall to neutralize helium ions and attached to the foremost end of a leg portion projected from the evacuating room into the space, said leg portion having a diameter smaller than that of said through-hole and a ring-shaped evacuating path being formed around the leg portion.

This type nuclear fusion apparatus is known from DE—A—2 854 576 and makes it necessary for a limiter to be arranged on the first wall, contacting and stabilizing plasma, and for deuterium or tritium to be supplied as fuel while evacuating helium ion, a product of the nuclear fusion reaction, so as to stably maintain the nuclear fusion reaction for a long time.

In order to discharge helium ions, it is necessary to introduce helium ions into a room pumped by an evacuating pump and to neutralize helium ions there to transform them to helium gas. The most usual way employed is to use diverters to generate magnetic field, but a large space is needed to accommodate diverter coils in this case and the design of coils for forming magnetic field is not easy, too. It was therefore attempted that helium ions were evacuated through a suction room without using diverters. Helium ions must also be neutralized in this case and it is therefore preferable to use a solid limiter. Conventionally, the solid limiter was attached to the first wall of the blanket and served to stably maintain plasma and to neutralize helium ions. Since a large amount of heat was exerted on the limiter, however, a strongly cooling means was needed to keep the temperature of limiter in a safety range, thus making the whole of the nuclear fusion apparatus bulky.

The object of the present invention is to provide a torus type nuclear fusion apparatus in which helium particles, a nuclear fusion reaction product, can be evacuated under such a condition that a temperature rise of a limiter for maintaining the plasma stable is suppressed to a lower level.

This object can be achieved by a torus type nuclear fusion apparatus which is characterized in that said limiter means comprises a second limiter arranged on the first wall to hold the shape of plasma stable, that the first limiter is a plate member for allowing a helium ion guiding and flowing path to be formed between the first wall and the plate member and that the connecting portion between the leg portion and the first limiter is provided with a slope to reflect helium ions, which have passed through the guiding flow path, toward the evacuating path.

In contrast to the conventional apparatus in which a single limiter was employed the torus type nuclear fusion apparatus of the present invention employs first and second limiters, one for the neutralization of helium ion and the other for the stabilization of the plasma. The latter can effectively evacuate helium particles under such a condition as to alleviate heat loading into the first limiter.

US—A—4 073 680 discloses a toroidal band limiter for a plasma confinement device which comprises first and second limiters. One limiter is in the form of a vertical toroidal band limiter. The other limiter is in the form of a plurality of poloidal plasma ring limiters used for containment wall protection during an instability that might occur during operation of the device. Both limiters shown in said reference are different from the limiters according to the present invention.

This invention can be more fully understood from the following detailed description when taken in conjunction with the accompanying drawing, in which:

Fig. 1 is partially sectioned view showing the main portion of a torus type nuclear fusion apparatus according to the present invention; and

Fig. 2 is an enlarged view showing in detail a first limiter used in the apparatus of Fig. 1.

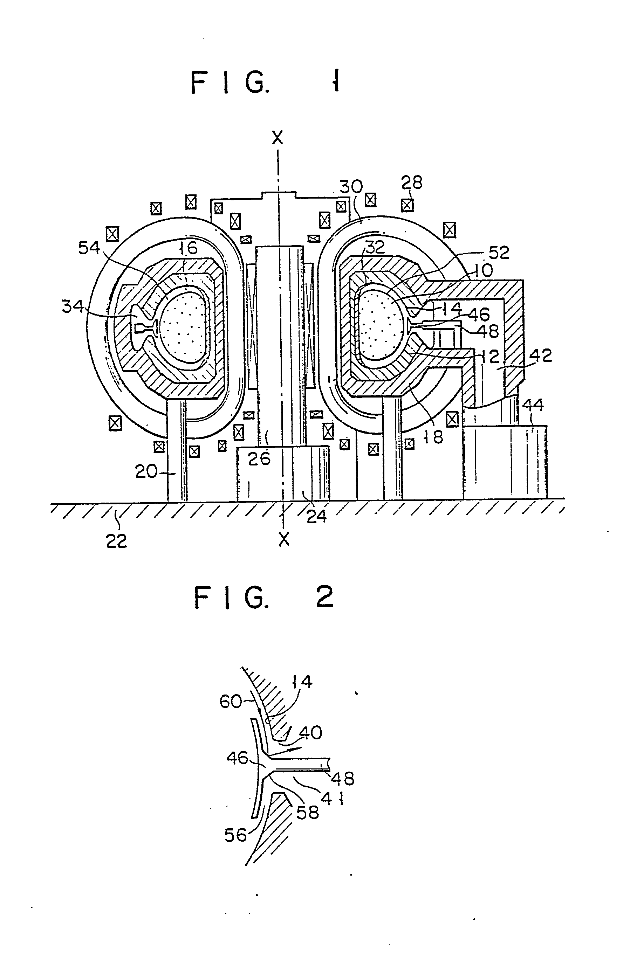

Fig. 1 is a partially sectioned view showing the main portion of a torus type nuclear fusion apparatus according to the present invention. Torus type plasma 10 is formed in a torus type space 16 enclosed by a first wall 14 of a blanket 12 in a plasma container.

The blanket 12 is enclosed and supported by a housing 18 for shielding heat and radio-active rays emitted from plasma 10, and the housing 18 is stable supported above the floor 22 by supporting legs 20. An iron core 26 is erected, coaxial with the principal axis or torus axis X—X of the apparatus, from a base 24 on the floor 22, and poloidal coils 28 are arranged around the iron core 26, taking this iron core 26 as its center. A toroidal coil 30 is wound around the housing 18 or plasma 10, passing between the iron core 26 and the housing 18. A main limiter (second limiter) 32 made of high melting point material such as molybdenum and having a large heat capacity is attached to the first wall 14 on the principal axis X—X side or inner side of space 16, covering a large area thereof, and the density of plasma being high and a large quantity of heat being stored on the principal axis X—X side or inner side of space 16. An air evacuating room 34 is provided inside the first wall 14, blanket 12 and housing 18 in the outer side of space 16 remote from the principal axis X—X. This room 34 is communicated with the space 16 through a through-hole 40 and connected to an air evacuating pump 44 through a flow path 42. A leg portion 48 erected inside the flow path 42 has a diameter smaller than that of through-hole 40 and projects into the space 16 through the through-hole 40. A plate-shaped sub-limiter 46 (first limiter), extending along the first wall 14, is attached to the foremost end of leg portion 48 projected into the space 16 (see Fig. 2). The space 16 is communicated with a evacuating flow path provided between the through-hole 40 and the leg portion 48, air evacuating room 34, flow path 42 and air evacuating pump 44.

The operation of torus type nuclear fusion apparatus according to the present invention will be roughly described referring to Figs. 1 and 2. When power is supplied to the toroidal coil 30 to generate toroidal magnetic field in the torus type space 16, electric field is excited through the iron core 26 in the sub-axial direction of torus and plasma 10 is generated by current flowing due to this electric field. When power is supplied to the poloidal coil 28 at the same time of power supply to the toroidal coil 30, plasma 10 is confined inside a magnetic face 52 due to poroidal and toroidal magnetic fields caused by both coils 28 and 30. The main limiter 32 serves to absorb a large amount of heat from plasma 10, contacting with it, to hold its shape stable and to neutralize a part of helium ion caused as a result of the fusion reaction. Remaining helium ions are introduced to and neutralized by a sub-limiter 46 which will be described later. Heat is exerted from said remaining helium ions to the sub-limiter 46.

As seen in Fig. 1, the shape of plasma 10 is maintained stable by contacting with the main limiter 32 and it may be considered that the sectioned circumference of plasma 10 corresponds to the magnetic face 52 which confines plasma 10 therein. Since the sub-limiter 46 attached to the foremost end of leg portion 48 is located along the magnetic face 52 and between the outer circumference of plasma 10 and the first wall 14, said remaining helium ions are diffused in the direction to the first wall 14 and guided toward the sub-limiter 46 along the toroidal magnetic field through a ring-shaped flow path 54 which is formed between the magnetic face 52 and the first wall 14 along the whole outer circumference of plasma 10. The main limiter 32 is formed to cover a large area on the first wall 14 and heat exerted on the main limiter 32 is reduced by an amount corresponding to heat exerted on the sub-limiter 46, so that the temperature rise of main limiter 32 can be suppressed to a larger extent as compared with the conventional apparatus in which single limiter was employed. The evacuating pump 44 is usually operated to evacuate air in the space 16 through the air evacuating room 34 when the nuclear fusion apparatus is working. Therefore, helium ion moved through the ring-shaped flow path 54 is passed through a guide flow path 56 between the first wall 14 and the sub-limiter 46, neutralized by colliding against a slope 58 formed at the connecting portion between the sub-limiter 46 and the leg portion 48, reflected in a direction shown by an arrow 60 and evacuated by the pump 44 through the evacuating flow path 41, evacuating room 34 and flow path 42.

As described above, the torus type nuclear fusion apparatus according to the present invention employs two limiters, one for the stable maintenance of the plasma shape and the other for the neutralization of helium ions. Therefore, the heat of the plasma and of the helium ions is not concentrated to a single limiter as seen in the conventional apparatus, but dispersed to two limiters, thus allowing the temperature rise of limiter to be neutralized without using any cooling means of extremely large capacity. The present invention can provide therefore a torus type nuclear fusion apparatus relatively simpler and smaller in size and capable of suppressing the temperature rise.

**Claims**

1. A torus type nuclear fusion apparatus for generating torus type plasma (10) in a space (16) enclosed by a first wall (14) of a blanket (12) and including limiter means for neutralizing helium ions as well as maintaining torus type plasma (10) stable, and evacuating means (34, 44) having an evacuating room (34) communicated through a through-hole (40) with the space (16) enclosed by the first wall (14) for evacuating helium gas caused through the neutralization of helium ions, a product of the fusion reaction, said limiter means comprising a first limiter (46) arranged between the outer circumference of plasma (10) and the first wall (14) to neutralize helium ions and attached to the foremost end of a leg portion (48) projected from the evacuating room (34) into the space (16), said leg portion (48) having a diameter smaller than that of said through-hole (40) and a ring-shaped evacuating path (41) being formed around the leg portion (48), characterized in that said limiter means comprises a second limiter (32) arranged on the first wall (14) to hold the shape of plasma (10) stable, that the first limiter (46) is a plate member for allowing a helium ion guiding and flowing path (56) to be formed between the first wall (14) and the plate member and that the connecting portion between the leg portion (48) and the first limiter (46) is provided with a slope (58) to reflect helium ions, which have passed through the guiding flow path (56), toward the evacuating path (41).

2. A torus type nuclear fusion apparatus according to claim 1, characterized in that said second limiter (32) is arranged on the first wall near a principal axis (X—X) of said apparatus and that said first limiter (46) is arranged on a side of said first wall (14) remote from said principal axis (X—X).

**Patentansprüche**

1. Torustyp-Kernfusionsanordnung zum Erzeugen von toroidalem Plasma (10) in einem von einer ersten Wand (14) eines Mantels (12) eingeschlossenen Raum (16), mit einer Limiter-Anordnung zum Neutralisieren von Heliumionen und zum Stabilhalten des toroidalen Plasmas (10), und einer Evakuiereinrichtung (34, 44) mit einer Evakuierkammer (34), die über ein Durchgangsloch (40) mit dem von der ersten Wand (14) eingeschlossenen Raum (16) in Verbindung steht, um durch die Neutralisation von Heliumionen als Reaktionsprodukt der Fusion entstehendes Heliumgas zu evakuieren, wobei die Limiter-Anordnung einen ersten Limiter (46) aufweist, der zwischen dem Außenumfang des Plasmas (10) und der ersten Wand (14) angeordnet und an dem vordersten Ende eines von der Evakuierkammer (34) in den Raum (16) ragenden Fußteils (48) befestigt ist, dessen Durchmesser kleiner als der des Durchgangslochs (40) ist, wobei um das Fußteil (48) herum ein ringförmiger Evakuierweg (41) gebildet ist, dadurch gekennzeichnet, daß die Limiter-Anordnung einen zweiten Limiter (32) enthält, der an der ersten Wand (14) angeordnet ist, um die Form des Plasmas (10) stabil zu halten, daß der erste limiter (46) ein Plattenteil ist, der die Bildung eines Heliumionen-Führungs- und Strömungsweges (56) zwischen der ersten Wand (14) und dem Plattenteil ermöglicht, und daß der Verbindungsabschnitt zwischen dem Fußteil (48) und dem ersten Limiter (46) mit einer Schrägen (48) ausgestattet ist, um durch den Führungs-Strömungsweg (56) gelangende Heliumionen in Richtung auf den Evakuierweg (41) abzulenken.

2. Anordnung nach Anspruch 1, dadurch gekennzeichnet, daß der zweite Limiter (32) an der ersten Wand in der Nähe einer Hauptachse (X—X) der Anordnung angeordnet ist, und daß der erste Limiter (46) auf einer Seite der ersten Wand (14) entfernt von der Hauptachse (X—X) angeordnet ist.

**Revendications**

1. Appareil de fusion nucléaire du type tore pour générer un plasma (10) du type tore dans un espace (16) enclos par un première paroi (14) d'une couverture (12) et incluant des moyens formant limiteur pour neutraliser les ions d'hélium ainsi que pour maintenir stable le plasma (10) du type tore et des moyens d'évacuation (34, 44) comprenant une chambre d'évacuation (34) communiquant à travers un trou traversant (40) avec l'espace (16) enclos par la première paroi (14) pour évacuer l'hélium gazeux produit par la neutralisation des ions d'hélium, un produit de la réaction de fusion, les dits moyens formant limiteur comprenant un premier limiteur (46) disposé entre la circonférence externe du plasma (10) et la première paroi (14) pour neutraliser les ions d'hélium et fixé à l'extrémité la plus en avant d'un élément en forme de jambe (48) qui dépasse dans l'espace (16) en provenance de la chambre d'évacuation (34), le dit élément en forme de jambe (48) ayant un diamètre inférieur à celui du dit trou traversant (40) et un chemin d'évacuation (41) en forme d'anneau étant formé autour de l'élément en forme de jambe (48), caractérisé en ce que les dits moyens formant limiteur comprennent un second limiteur (32) disposé sur la première paroi (14) pour maintenir stable la forme du plasma (10): en ce que le premier limiteur (46) est un flasque pour permettre la formation, entre la première paroi (14) et la flasque, d'un chemin (56) de guidage et d'écoulement des ions d'hélium; et en ce que la portion de liaison entre l'élément en forme de jambe (48) et le premier limiteur (46) est munie d'une pente (58) pour réfléchir, en direction du chemin d'évacuation (41), les ions d'hélium qui sont passés par le chemin de guidage et d'écoulement (56).

2. Appareil de fusion nucléaire du type tore, selon la revendication 1, caractérisé en ce que le dit second limiteur (32) est disposé sur la première paroi près d'un axe principal (X—X) du dit appareil; et en ce que le dit premier limiteur (46) est disposé du côté de la dite première paroi (14) éloigné du dit axe principal (X—X).

0 066 206

# FIG. 1

# FIG. 2

1